# DEMANDE DE BREVET EUROPEEN

(11) **EP 0 605 316 A1**
(43) Date de publication de la demande: **06.07.1994**
(21) Numéro de dépôt: 93403182.4
(22) Date de dépôt: 27.12.1993
(51) Int. Cl.: B07C 5/342, G21C 17/06

(54) **Procédé et dispositif de tri automatique de pastilles de combustible nucléaire**

(30) Priorité: 29.12.1992 FR 9215846
(71) Demandeur: SOCIETE FRANCO-BELGE DE FABRICATION DE COMBUSTIBLES FBFC, F-92084 Paris La Défense (FR)
(72) Inventeur: Bernardin, Michel, F-38640 Claix (FR); Bouvet, Paul, F-38470 Vinay (FR); Wache, Claude, F-26100 Romans (FR)
(74) Mandataire: Fort, Jacques

(57) **Abrégé**

Le dispositif de tri automatique permet de répartir des pastilles de combustible nucléaire en pastilles correctes, acceptables et rebutées. Il comprend : un poste de présentation de pastilles, destiné à déplacer simultanément n files de pastilles suivant des trajets parallèles jusqu'à ce que les n pastilles terminales soient à des emplacements de prise décalés longitudinalement; un barillet d'entrée et d'orientation (22) muni de moyens pour saisir simultanément les n pastilles terminales et les faire tourner pour les aligner, ce barillet étant rotatif autour d'un axe entre une position où les moyens de saisie sont aux emplacements de prise et une position où ils sont à un poste de transfert; un barillet de contrôle (24) muni de moyens pour recevoir n pastilles à la fois, rotatif entre une position où les moyens de réception sont à l'emplacement de transfert, une position située à un poste de contrôle, et une position de sortie; un bloc d'examen optique simultané des n pastilles placées au poste de contrôle; et un ensemble de prise individuelle et de répartition des pastilles en lots.

## Description

La présente invention concerne l'inspection des pastilles cylindriques de combustible nucléaire, à base d'oxyde d'uranium en général utilisées dans les crayons de combustible pour réacteurs nucléaires, en vue de déceler leurs défauts de surface et d'affecter les pastilles à des classes différentes suivant la nature et l'importance des défauts qu'elles présentent.

Le procédé le plus utilisé à l'heure actuelle pour trier les pastilles consiste à les examiner visuellement et à les répartir manuellement entre plusieurs lots, par exemple constitués par les pastilles correctes, les pastilles acceptables pour des crayons de combustible affectés à des régions du réacteur où le flux neutronique est moindre, et les pastilles à rejeter et à recycler au début du processus de fabrication.

Cette opération manuelle est pénible et lente. La fatigue de l'opérateur peut conduire, au bout d'un certain temps, à des erreurs. Enfin, il existe un risque de contamination, en particulier lorsque les pastilles sont réalisées à partir de combustible retraité et/ou contenant du plutonium.

On a déjà proposé divers dispositifs d'inspection de pastilles de combustible nucléaire. En particulier le document FR-A-2 638 983 décrit un appareil de manutention et d'inspection externe de pastilles permettant d'amener chaque pastille à son tour à un emplacement où elle est mise en rotation autour de son axe, afin de permettre l'examen le long de génératrices successives. Un tel dispositif, dont les moyens d'examen proprement dits ne sont pas décrits, ne semble pas permettre d'atteindre une cadence élevée de tri.

La présente invention vise notamment à fournir un procédé et un dispositif de tri automatique permettant d'atteindre une cadence élevée et susceptible d'être mis en oeuvre de façon complètement automatique.

Dans ce but l'invention propose notamment un procédé caractérisé en ce que :
- on pousse n files parallèles de pastilles (n étant un nombre entier supérieur à 1) pour amener les n pastilles terminales des files en butée dans des positions longitudinalement décalées les unes des autres,
- on saisit les n pastilles terminales à la fois à l'aide de pinces que l'on fait tourner pour aligner les pastilles,
- on transfère simultanément les n pastilles alignées sur une table de contrôle qu'on amène sous un bloc de contrôle optique,
- on fait tourner les pastilles simultanément pour les examiner à l'aide du bloc de contrôle optique,
- on traite les signaux lumineux fournis par le bloc de contrôle optique pour chaque pastille,
- on saisit simultanément les n pastilles à l'aide de pinces individuelles d'un jeu de pinces,
- et on déplace en bloc les pinces individuelles portant les n pastilles suivant un trajet qui les fait passer successivement à au moins un poste de réception de pastilles correctes, où on ouvre les pinces portant les pastilles correctes, et un autre poste où on libère les pastilles à rejeter, la commande d'ouverture desdites pinces étant effectuée en fonction des signaux traités.

L'invention propose également un dispositif comprenant:
- un poste de déchargement et de présentation de pastilles, destiné à déplacer simultanément n files de pastilles (n étant un nombre entier supérieur à 1) suivant des trajets parallèles à la direction des files jusqu'à ce que les n pastilles terminales soient à des emplacements de prise décalés longitudinalement,
- un barillet d'entrée et d'orientation muni de moyens pour saisir simultanément les n pastilles terminales aux emplacements de prise et les faire tourner pour les amener en alignement mutuel, ledit barillet étant rotatif autour d'un axe entre une position où lesdits moyens de saisie sont aux emplacements de prise et une position où ils sont à un poste de transfert,
- un barillet de contrôle muni de moyens pour recevoir n pastilles à la fois et les mettre en rotation simultanément, rotatif entre une position où lesdits moyens de réception sont aux emplacements de transfert, une position située à un poste de contrôle, et une position de sortie,
- un dispositif de contrôle optique muni de moyens d'examen optique simultané des n pastilles placées au poste d'examen, et
- un ensemble de prise individuelle des pastilles à la position de sortie et de répartition de ces pastilles en lots suivant l'affectation donnée par les moyens d'examen optique.

L'invention sera mieux comprise à la lecture de la description qui suit d'un mode particulier de réalisation, donné à titre d'exemple non limitatif. La description se réfère aux dessins qui l'accompagnent, dans lesquels :
- la figure 1 est un schéma en perspective d'une pastille de combustible nucléaire, présentant des défauts susceptibles d'être rencontrés dans la réalité ;
- la figure 2 est une vue schématique de dessus de la disposition générale des composants d'un dispositif de tri automatique de pastilles suivant un mode particulier de réalisation ;
- la figure 3 est une vue schématique en élévation, montrant les composants du dispositif de la figure 2, représentés pour plus de clarté en ligne et non pas dans leur disposition relative réelle ;
- la figure 4 est une vue schématique en perspective montrant le transfert des pastilles vers un tapis roulant d'amenée au poste de déchargement du dispositif de la figure 2 ;
- la figure 5 est une vue de dessus montrant schématiquement le tapis roulant et le poste de déchargement du dispositif de la figure 2 ;
- la figure 6 est une vue de dessus montrant, de façon simplifiée, une fraction du barillet d'entrée et d'orientation et le tapis roulant d'amenée des pastilles ;
- la figure 6A est un schéma à grande échelle montrant le changement d'orientation des pastilles provoqué par les moyens de saisie ;
- la figure 7 est une vue schématique en élévation montrant le poste de contrôle des pastilles ;
- la figure 8 est une vue de dessus d'une fraction du poste de contrôle des pastilles, vu dans la direction de la flèche VIII de la figure 7 ;
- la figure 9 est une vue de dessus montrant une constitution possible du barillet d'entrée et d'orientation du dispositif de la figure 2 ;
- la figure 10 est une vue en élévation et en coupe verticale partielle des mécanismes permettant d'ouvrir et de fermer une pince ;
- la figure 11 est une vue en élévation, à grande échelle, d'une pince appartenant aux moyens de remise en clayette simultanée de n pastilles ;
- la figure 12 montre, en élévation, une fraction de la pince de la figure 10, en position de repos (en traits pleins) et en position de prise d'une pastille (en traits mixtes) ;
- la figure 13 est une vue en élévation montrant une constitution possible de la partie de l'ensemble de répartition des pastilles affectée à la constitution de lots de pastilles correctes ou acceptables.

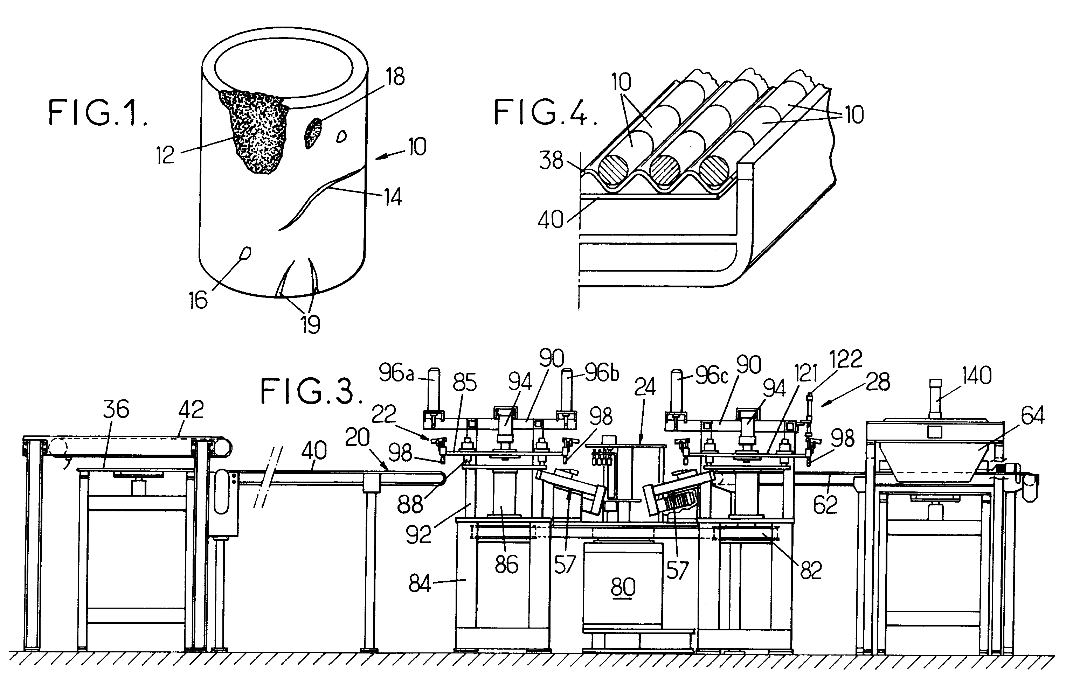

La figure 1 montre schématiquement une pastille de combustible 10 du type couramment utilisé dans les réacteurs nucléaires. Une pastille correcte se présente sous forme d'un cylindre dont la périphérie est rectifiée et dont les faces terminales présentent un évidement central concave et éventuellement un chanfrein 30. La figure 1 montre des défauts susceptibles d'être rencontrés. Ce sont par exemple un éclat 12, une fissure 14, une piqûre 16, une inclusion métallique 18, des fissures en onglets 19.

Le dispositif qui sera maintenant décrit permet d'examiner des pastilles et de les répartir en plusieurs catégories qui, dans le cas du dispositif qui sera décrit à titre d'exemple, comportent un lot de pastilles correctes, un lot de pastilles acceptables et un lot de pastilles rebutées.

Le dispositif illustré en figures 2 et 3 peut être regardé comme comportant :
- un poste de déchargement et de présentation 20,
- un barillet d'entrée et d'orientation 22,
- un barillet de contrôle 24,
- un ensemble opto-électronique 26,
- un ensemble de reprise et de répartition ayant un barillet de sortie 28 prévu pour déposer individuellement les pastilles à un poste de réception de pastilles correctes 30, à un poste de réception de pastilles acceptables 32 et dans un bac 34 de réception de pastilles défectueuses.

Ces différents composants seront maintenant successivement décrits, d'abord dans leur constitution générale, puis dans une réalisation particulière.

### Poste de déchargement et de présentation

Le poste de déchargement et de présentation montré en figures 2 et 3 comporte une table 36 de réception de clayettes rectangulaires 38 contenant des pastilles disposées en files, par exemple en vingt cinq files de quarante pastilles chacune. La table est munie de moyens permettant de déplacer progressivement la clayette dans le sens de la flèche f1 de façon à amener chaque fois n files de pastilles en face d'un tapis roulant 40. Des moyens mobiles, constitués dans le cas de la figure 3 par une bande sans fin 42 munie de doigts, permettent de pousser n files à la fois vers le tapis roulant, dans la direction de la flèche f2. Le tapis est prévu pour amener les n pastilles de tête des files à des emplacements de prise décalés les uns des autres et alignés suivant une direction oblique par rapport à f2, c'est-à-dire par rapport à la direction des files. Le tapis 40 est commandé par un moteur non représenté qui permet de lui donner une vitesse légèrement supérieure à celle de la bande sans fin 42 et d'arrêter le tapis si nécessaire, par exemple lorsque n pastilles occupent les emplacements de prise. Le tapis 40 constitue un stockage intermédiaire permettant d'alimenter en continu le barillet d'entrée et d'orientation, pendant que l'on remplace une clayette vidée par une clayette chargée.

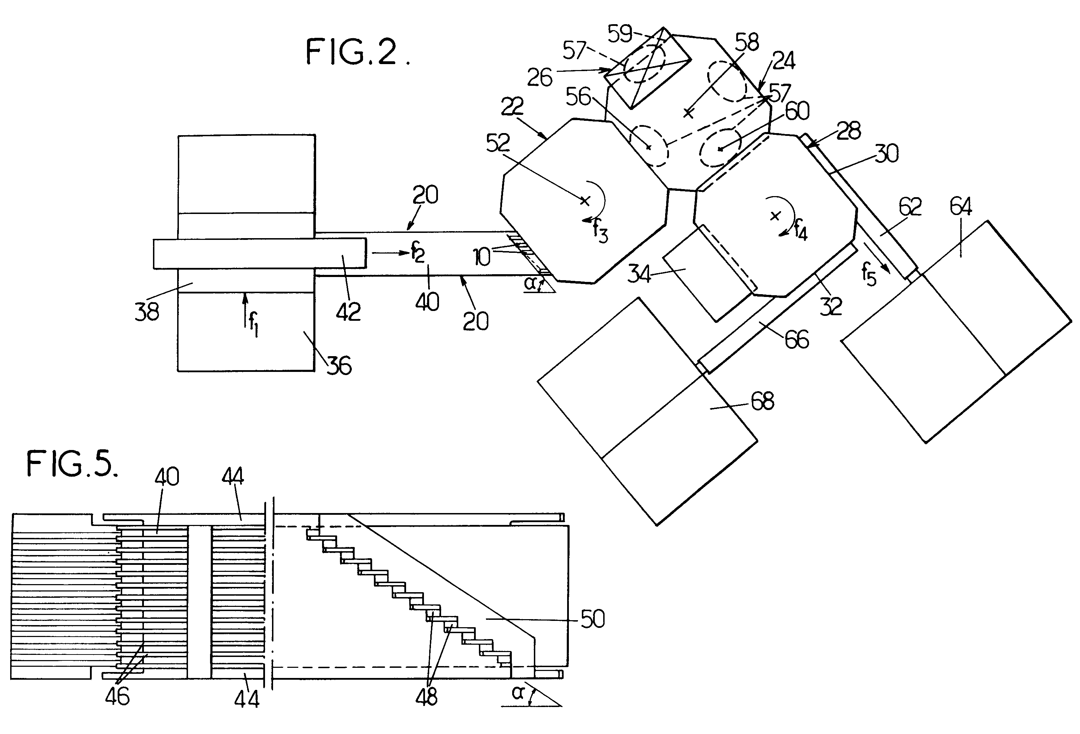

Les figures 4 et 5 montrent que les files de pastilles peuvent être maintenus à l'écartement convenable dans les clayettes 38 en donnant à ces dernières une forme ondulée ou d'autres formes appropriées. Des flasques 44 et des guides 46 peuvent être prévus au-dessus du tapis roulant 40 pour maintenir les files à l'écartement convenable. Les emplacements de prise décalés longitudinalement peuvent être matérialisés par des butées 48 (figure 5). Ces butées 48 peuvent être montées sur un support unique 50 permettant notamment d'ajuster l'angle a entre la direction d'alignement des pastilles et le tapis roulant.

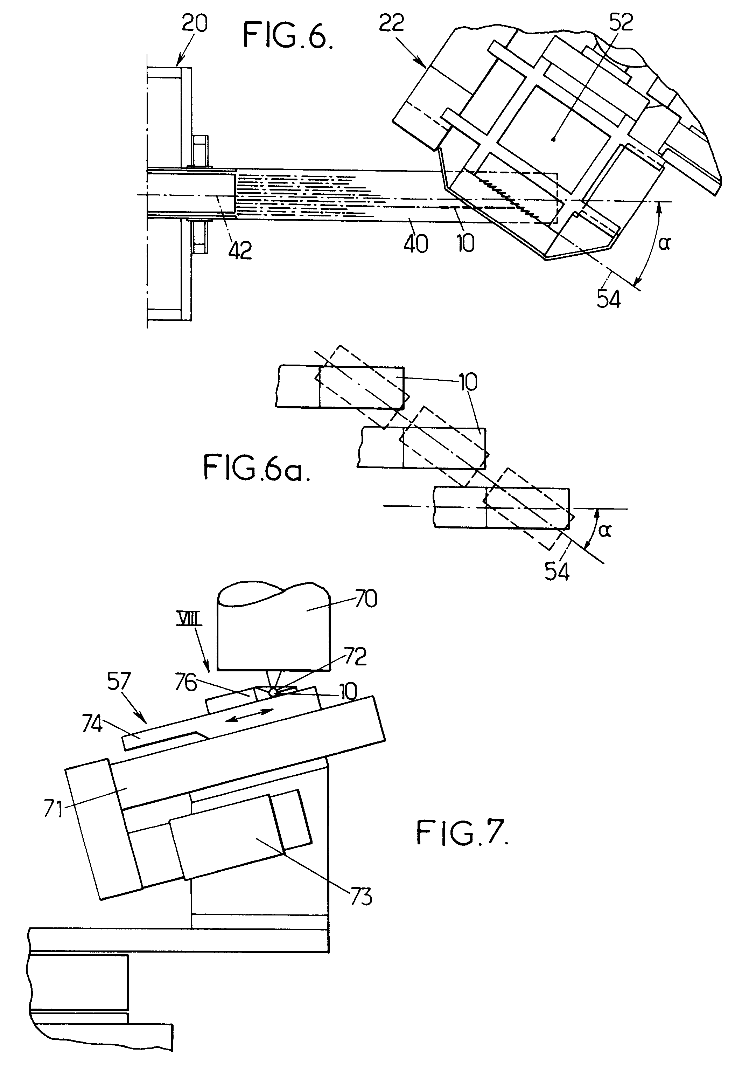

Le barillet d'entrée et d'orientation 22 a pour fonction de saisir simultanément n pastilles aux emplacements de prise, de les faire tourner de l'angle a pour les amener en alignement (c'est-à-dire de les faire passer de la position montrée en traits pleins à la position montrée en tirets sur la figure 6A), puis de les amener à un poste de transfert où elles seront posées par le barillet de contrôle 24. La possibilité de rotation simultanée des pastilles est obtenue en décalant latéralement l'axe du barillet 52 par rapport au tapis roulant 40. L'emplacement des butées de retenue des pastilles aux emplacements de prise est tel que ces pastilles puissent être saisies par des pinces, qui seront décrites plus loin, disposées suivant une ligne 54 dont la médiatrice passe par l'axe 52.

Pour permettre une cadence de fonctionnement élevée, le barillet 22 comporte non pas un seul jeu de n pinces, mais quatre jeux répartis angulairement à 90° les uns des autres autour de l'axe du barillet, permettant ainsi à un jeu d'être aux emplacements de prise de n pastilles 10, pendant qu'un autre jeu de pinces se trouve à un poste 56 de transfert vers le barillet de contrôle 24. Dans le cas montré en figure 2, le poste de transfert 56 est placé à l'opposé des emplacements de prise par rapport à l'axe 52 et le barillet 22 est prévu pour prendre quatre positions angulaires successives lorsque le barillet tourne dans la direction indiquée par la flèche f3. Les pastilles restent alors temporairement dans une position d'attente, écartées angulairement de 90° par rapport aux emplacements de prise et au poste de transfert et de dépose des pastilles.

### Barillet de contrôle

Le barillet de contrôle 24 est prévu pour recevoir n pastilles alignées à la fois, amenées au poste de transfert 56 par le barillet d'entrée 22. Dans le cas illustré sur la figure 2, ce barillet peut lui aussi prendre quatre positions angulaires, écartées de 90°, autour d'un axe 58. Il porte au moins quatre tables de contrôle 57 également réparties à 90° autour de l'axe 58 du barillet. Lors de rotations successives de 90° du barillet, chaque table 57 passe successivement par le poste de transfert 56, un poste de contrôle 59, une position d'attente et une position de sortie 60, constituant une interface avec le barillet de sortie 28 appartenant à l'ensemble de reprise et de répartition. Les tables 57 sont prévues pour recevoir simultanément n pastilles comme on le verra plus loin.

Chaque table 57 (figures 3 et 7) comporte un plateau incliné 74, muni de moyens permettant de lui donner un mouvement de va-et-vient dans le sens de son inclinaison, destiné à recevoir les n pastilles alignées, et une barrette fixe 76 d'appui des pastilles. On constitue le plateau mobile 74 de façon que son coefficient de frottement soit plus élevé que celui sur la barrette fixe 76. L'inclinaison du plateau mobile est choisie de façon à provoquer une rotation régulière et précise des pastilles 10 qu'il porte, par exemple de un tour par seconde.

### Ensemble de reprise individuelle et de répartition des pastilles

Le composant principal de cet ensemble est le barillet de sortie 28 comprenant lui aussi au moins un jeu de n pinces (quatre jeux régulièrement répartis dans le cas particulier qui sera décrit). Les n pinces d'un même jeu sont individuellement commandables en fonction des résultats de l'examen effectué au poste de contrôle 59 par le bloc de contrôle optique 26. Lors de la rotation du barillet de sortie dans le sens de la flèche f4, chaque jeu passe successivement, à partir de la position de sortie 60 :
- au poste 30 de réception de pastilles correctes, où les pinces portant de telles pastilles s'ouvrent et libèrent les pastilles sur un convoyeur 62 d'amenée des pastilles sur une clayette de réception 64 ;
- au poste 32, d'où un convoyeur 66 amène les pastilles acceptables sur une clayette 68 ; et
- au dessus du bac 34, où les pinces restantes s'ouvrent pour libérer les pastilles défectueuses et rebutées.

Il serait possible de prévoir un nombre de classes différent et de modifier l'ordre de dépose des pastilles en fonction de leur classe.

### Ensemble opto-électronique

L'ensemble opto-électronique 26 est avantageusement du genre décrit dans la demande de brevet déposée le même jour que la présente demande pour "Procédé et dispositif optiques de classification automatique de pastilles cylindriques de combustible nucléaire". La figure 7 montre le bloc de contrôle optique 70 d'un tel ensemble, placé au poste d'examen de façon à observer une génératrice 72 de la surface latérale de toutes les pastilles. On peut notamment prévoir des jeux de pinces et des tables traitant n = 12 pastilles à la fois et un bloc de contrôle optique 70 constitué de quatre capteurs distincts observant chacun trois pastilles.

La cadence de prise d'images par les capteurs est asservie à la vitesse de rotation des pastilles, elle-même fixée par la vitesse de déplacement du plateau 74, et l'image de la pastille est acquise génératrice par génératrice, chaque fois sur une largeur de quelques centièmes de millimètre.

Les déplacements du plateau 74 peuvent être commandés par un moteur électrique 73, par l'intermédiaire d'un train d'engrenage et d'une vis sans fin placés dans un carter 71.

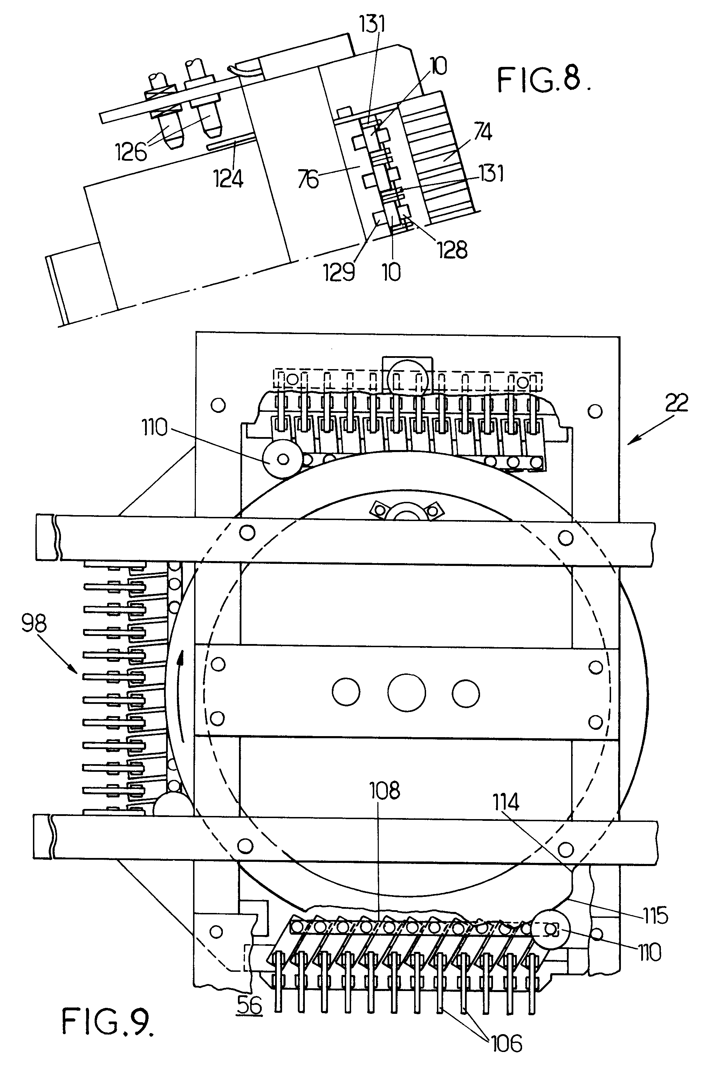

La figure 8 montre une fraction d'un plateau permettant de recevoir n = 12 pastilles, écartées les unes des autres pour que le bloc de contrôle optique 70, constitué par exemple de quatre capteurs observant chacun trois pastilles, puisse relever des défauts aux extrémités même lorsque les pastilles sont sans chanfreins. Le plateau mobile 74 porte un doigt 124 coopérant avec des capteurs 126 permettant de déterminer le déplacement du plateau. Dans la barrette fixe 76 et dans le plateau mobile 74 sont ménagés des évidements respectifs 129 et 128 permettant aux mâchoires des pinces de saisir les pastilles 10 et de les libérer sans choc. Des saillies 131 peuvent être prévues pour maintenir longitudinalement les pastilles.

Une unité d'automatisme, de traitement de signal et de calcul (non représentée) commande le fonctionnement de l'ensemble des composants mécaniques et optiques et traite les signaux de mesure fournis par le bloc de contrôle optique 70.

Comme cela est montré sur la figure 3, pour garantir un fonctionnement synchrone des différents barillets, un même moteur 80 peut être prévu pour les entraîner à l'aide d'une courroie crantée 82. L'ensemble des parties mécaniques est supportée au-dessus du sol par un bâti 84.

Chacun des composants décrits ci-dessus peut avoir diverses constitutions. On décrira maintenant une constitution de chacun de ces composants qui s'est montrée particulièrement intéressante.

Le barillet d'entrée et de présentation 22 (figures 3 et 9) comporte un plateau 85 portant les jeux de pinces. Ce plateau est entraîné en rotation par un moyeu 86 auquel il est attelé par des colonnes de guidage verticales 88. Un porte-vérin 90 est maintenu au-dessus du plateau 85 par des rehausses 92 fixées au bâti 84. Un vérin central 94 relie le porte-vérin 90 au plateau 85 et permet d'amener le plateau 85 à une position basse de préhension et une position haute de transport des pastilles. Deux vérins latéraux 96a et 96b sont respectivement prévus pour provoquer la fermeture forcée des pinces au poste de déchargement et de présentation 20 et l'ouverture des pinces au poste de transfert 56.

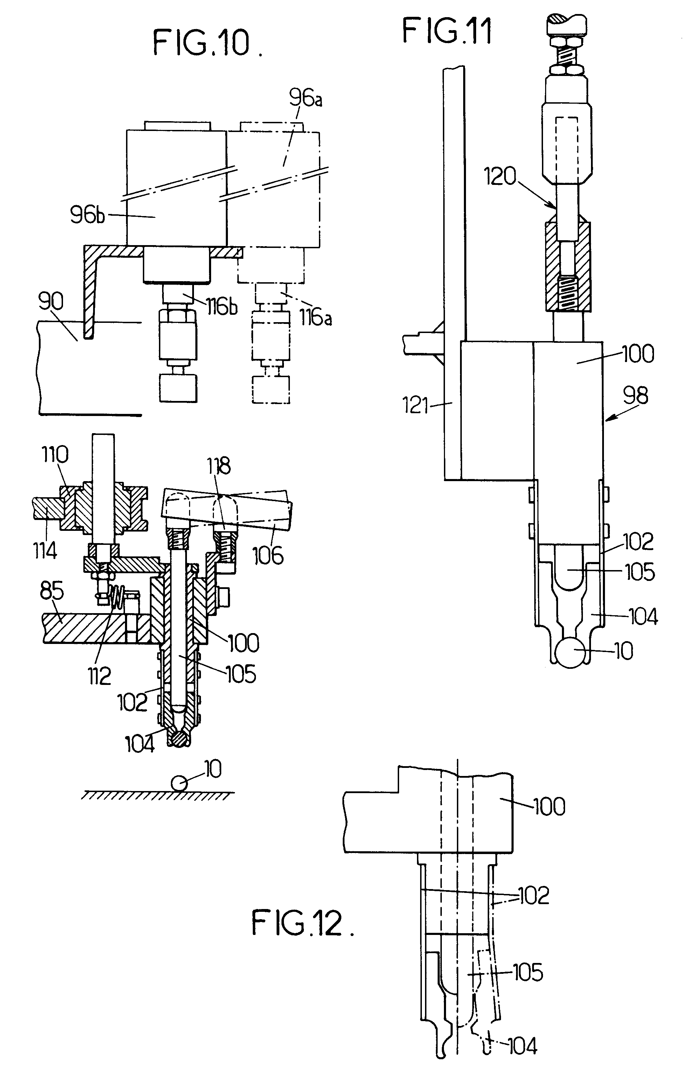

La figure 9 montre trois des quatre jeux de n = 12 pinces 98, dont chacune peut avoir la constitution générale montrée en figure 10. La pince a alors un corps 100 auquel sont fixés deux lames élastiques 102 portant des mâchoires 104. Le corps de pince 100 est monté dans le plateau 85 de façon à pouvoir tourner autour de son axe de l'angle a (figure 6A). Il est creux et contient un noyau de commande 105 déplaçable entre une position basse d'ouverture forcée des mâchoires 104 et une position haute où il permet aux mâchoires de se refermer sous l'action des lames élastiques 102 (figure 12).

Des moyens sont prévus pour faire tourner simultanément toutes les pinces d'un même jeu de l'angle a et pour provoquer l'ouverture ou la fermeture simultanée de toutes les pinces du jeu.

Pour cela, l'extrémité haute de chaque corps de pince 100 est articulée sur une biellette 109 qui la relie à une barre de couplage commune 108. L'extrémité de la barre 108 porte un galet 110 maintenu par un ressort 112 en appui contre une came 114 ayant une partie saillante.

La partie saillante 115 a une position angulaire, un développement angulaire et une saillie tels qu'elle fournit aux pinces 98 l'orientation nécessaire pour saisir n pastilles décalées et placées au poste de déchargement et de présentation et qu'elle impose aux pinces de venir dans l'orientation où les n pastilles sont alignées lorsque le plateau 85 arrive à proximité de l'orientation de dépose. Toutefois, le changement d'orientation des pinces peut intervenir à un autre emplacement.

Le mécanisme d'ouverture et de fermeture simultanées des pinces 98 du barillet 22 est représenté en détail sur la figure 10 où le vérin 96a de fermeture (en traits mixtes) et le vérin 96b d'ouverture sont représentés côte à côte, alors qu'en réalité ils sont respectivement à l'emplacement de transfert et au poste de déchargement et de présentation.

Chaque vérin comporte un corps fixé au porte-vérin 90 et une tige 116a ou 116b mobile verticalement entre la position de repos où elle est montrée en figure 10 et une position basse active.

Le vérin 96b est placé de façon à faire basculer les culbuteurs 106 autour de chapes respectives 118 et à enfoncer les noyaux 105 pour ouvrir les mâchoires lorsqu'il est alimenté. Réciproquement le vérin 96a provoque la fermeture des pinces situées au poste de transfert en relevant leur noyau 105 lorsqu'il est alimenté.

L'extrémité inférieure du noyau est arrondie et les mâchoires 104 ont un profil interne permettant d'obtenir une ouverture des pinces 98 progressive afin que les pastilles soient déposées sans choc. Les matériaux constitutifs du noyau 105 et des mâchoires 104 sont avantageusement traités pour retarder leur usure. Enfin la forme interne des mâchoires est telle qu'elles enserrent la pastille suffisamment pour qu'elle reste en place le plus longtemps possible lors des mouvements de montée ou de descente des noyaux 105.

Le barillet de sortie 28 est similaire au barillet 22 mais ses pinces sont prévues pour que leur ouverture soit commandée individuellement et non pas par jeu, alors que leur fermeture peut être commandée en bloc, comme pour le barillet 22.

La figure 11, où les éléments correspondant à ceux déjà décrits portent le même numéro de référence, montre une des pinces 98 du barillet de sortie 28. Le corps 100 de la pince est fixé au plateau tournant 121 (figure 3) du barillet et son noyau 105 est muni d'une tringle de commande 120. Le porte-vérin 90 du barillet de sortie 28 est muni, au-dessus de la position de sortie, d'un vérin unique 96c destiné à fermer toutes les pinces d'un jeu sur les pastilles occupant la table de contrôle qui se trouve à cette position. Il comporte également un vérin unique (non représenté) placé au-dessus du bac 34, destiné à ouvrir toutes les pinces qui sont encore fermées. Il a enfin, au-dessus des postes de réception 30 et 32 (figure 2), deux jeux respectifs de n vérins individuels 122 (figure 3). Ces vérins permettent de libérer sélectivement les pastilles correctes et les pastilles acceptables sur des convoyeurs respectifs 62 et 66.

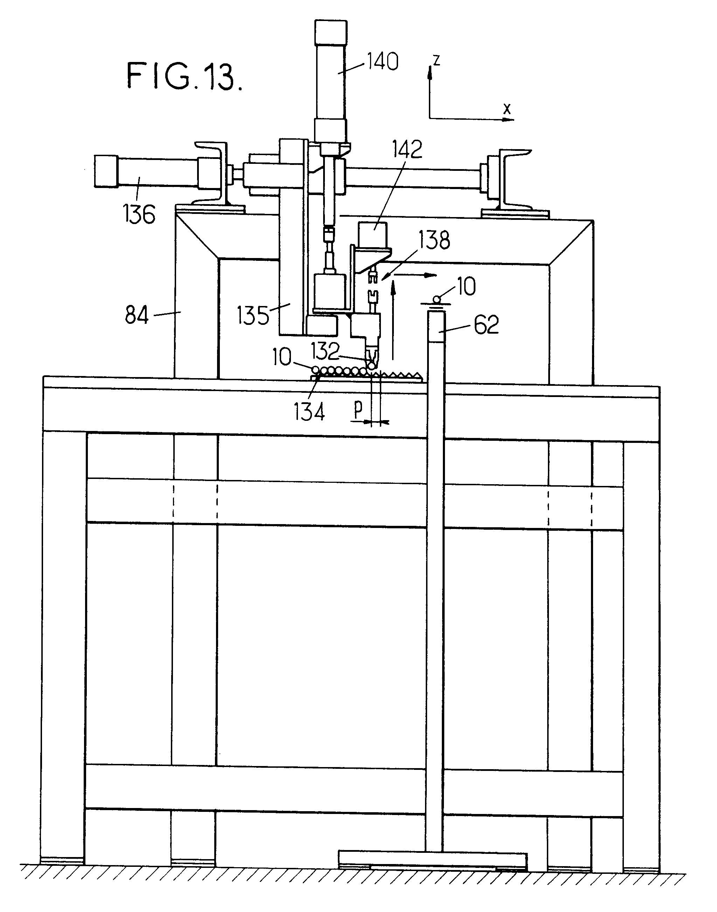

La figure 13 montre une fraction de l'ensemble 64 de mise en clayettes qui permet de regrouper les pastilles correctes déposées au poste de réception 30 en lots rangés sur des clayettes contenant chacune un nombre déterminé de pastilles. L'ensemble 68 affecté au poste 32 peut avoir la même constitution.

L'ensemble de reprise dépose des pastilles, toutes en alignement, en nombre aléatoire, sur la bande du convoyeur 62 qui, par son mouvement suivant la direction de la flèche f5 (figure 2) constitue une file de pastilles en appui contre une butée non représentée. Une pince 132, portée par le bâti 84 par l'intermédiaire de moyens de manoeuvre, comporte des mâchoires de profil similaire à celui des mâchoires 104, mais de longueur correspondant au nombre m de pastilles à mettre en place dans chacune des rigoles parallèles de réception prévues avec un écartement p (supérieur au diamètre des pastilles) sur une clayette 134. La pince 132 permet en conséquence de prélever une file de m pastilles à la fois et de la transférer dans une rigole.

Les moyens de manoeuvre doivent permettre de déplacer la pince horizontalement dans la direction x transversale au sens de déplacement du convoyeur 62 et verticalement, dans la direction z. Les moyens de manoeuvre montrés en figure 13 comprennent dans ce but un socle 135 de déplacement suivant la direction horizontale x, également transversal aux rigoles de la clayette 134 à charger. Un vérin 136 porté par le bâti 84 commande les déplacements dans la direction x. Le socle comporte lui-même un ensemble porte-pinces 138 déplaçable verticalement (direction z) par un vérin 140. Le corps de la pince 132 est fixé à cet ensemble qui est également muni d'un vérin 142 d'ouverture et de fermeture de la pince.

On décrira maintenant le procédé que permet de mettre en oeuvre le dispositif, de façon succincte du fait qu'il ressort directement de la structure du dispositif. Les valeurs numériques qui seront données ne constituent que des exemples.

Les pastilles à vérifier sont amenées sur des clayettes 38 portant par exemple vingt-cinq rangées de quarante pastilles. La clayette portant les pastilles à vérifier est posée sur la table 36 qui permet de déplacer latéralement la clayette, par pas correspondant à douze files de pastilles. Les douze files à vérifier pendant une étape sont poussés, suivant la direction f2, vers le tapis 40.

Le barillet d'entrée et d'orientation 22 peut prendre quatre orientations de travail. Dans chacune de ces orientations, les pinces d'un jeu sont disposées au-dessus de douze pastilles au poste de présentation et leurs mâchoires sont orientées pour correspondre à la direction des pastilles. Un second jeu est à un emplacement d'attente, un troisième est au poste de transfert, un quatrième est à un poste d'attente.

La séquence des opérations, à partir d'une orientation donnée et alors que le plateau 85 est maintenu en position haute par le vérin central 94, est la suivante.

Le vérin 94 descend le plateau jusqu'à une position où les pinces 98, alors ouvertes, qui se trouvent au poste de présentation, encadrent douze pastilles. Les pinces 98 situées au poste de transfert 56, alors fermées, posent douze pastilles sur la table 57 qui se trouve au même poste. Les vérins 96a et 96b sont commandés, provoquant la prise des pastilles situées au poste de présentation 20 et la libération des pastilles sur la table de contrôle 57. Puis le vérin 94 relève le plateau et celui-ci tourne d'un quart de tour sous l'action du moteur 80, en même temps que les barrillets 24 et 28. Cette rotation de 90° amène la table de contrôle 57 qui vient de recevoir des pastilles au poste de contrôle 59 et amène une table de contrôle vide au poste de présentation. Pendant que cette table de contrôle est chargée, les douze pastilles situées au poste de contrôle sont vérifiées. Le capteur envoie les signaux obtenus à l'unité de traitement de signal, de calcul et d'automatisme non représentée.

La cadence de l'opération de contrôle peut être de n pastilles (n étant le nombre de pastilles par poste) en un temps inférieur à 3 secondes (acquisition et traitement).

Au cycle suivant, la table de contrôle est amenée à la position de sortie 60 où les douze pastilles sont saisies par un jeu de pinces 98 du barillet de sortie 28. Les déplacements verticaux du plateau porte-pinces 121 du barillet de sortie peuvent être commandés comme ceux du plateau porte-pinces 85 du barillet d'entrée et d'orientation 22. Au cours des trois cycles qui suivent, les pastilles correctes sont déposées au poste 30, les pastilles acceptables sont déposées au poste 32 et les pastilles rebutées sont lâchées dans le bac 34. Les vérins individuels 122 sont commandés électriquement par l'unité de traitement de signal, de calcul et d'automatisme, qui peut traiter des signaux correspondant à un jeu de pastilles pendant le temps nécessaire au transfert de ce jeu de pastilles depuis le poste de contrôle jusqu'au poste de réception des pastilles correctes 30.

L'invention est susceptible de nombreuses variantes et par exemple les pinces mécaniques peuvent être remplacées par des moyens de préhension d'autre nature, tels que des ventouses. Une autre variante comprend trois barillets comportant chacun trois postes pour répartir les pastilles uniquement en classes correcte et incorrecte.

## Revendications

1. Procédé de tri automatique de pastilles cylindriques de combustible nucléaire, caractérisé en ce que :
- on pousse n files parallèles de pastilles (n étant un nombre entier supérieur à 1) pour amener les n pastilles terminales des files en butée dans des positions longitudinalement décalées les unes des autres,
- on saisit les n pastilles terminales à la fois à l'aide de pinces que l'on fait tourner pour aligner les pastilles,
- on transfère simultanément les n pastilles alignées sur une table de contrôle qu'on amène sous un bloc de contrôle optique,
- on fait tourner les pastilles simultanément pour les examiner à l'aide du bloc de contrôle optique,
- on traite les signaux lumineux restitués au capteur par chaque pastille,
- on saisit simultanément les n pastilles à l'aide de pinces individuelles d'un jeu de pinces,
- et on déplace en bloc les pinces individuelles portant les n pastilles suivant un trajet qui les fait passer successivement à au moins un poste de réception de pastilles correctes, où on ouvre les pinces portant les pastilles correctes, et à au moins un autre poste où on libère les pastilles à rejeter, la commande d'ouverture desdites pinces étant effectuée en fonction des signaux traités.

2. Dispositif de tri automatique de pastilles cylindriques de combustible nucléaire, caractérisé en ce qu'il comprend :
- un poste (20) de déchargement et de présentation de pastilles, destiné à déplacer simultanément n files de pastilles (n étant un nombre entier supérieur à 1) suivant des trajets parallèles à la direction des files jusqu'à ce que les n pastilles terminales (10) soient à des emplacements de prise décalés longitudinalement,
- un barillet d'entrée et d'orientation (22) muni de moyens pour saisir simultanément les n pastilles terminales aux emplacements de prise et les faire tourner pour les amener en alignement mutuel, ledit barillet étant rotatif autour d'un axe entre une position où lesdits moyens de saisie sont aux emplacements de prise et une position où ils sont à un poste de transfert (56),
- un barillet de contrôle (24) muni de moyens (57) pour recevoir n pastilles à la fois et les mettre en rotation simultanément, rotatif entre une position où lesdits moyens de réception (57) sont aux emplacements de transfert, une position située à un poste de contrôle (59), et une position de sortie,
- un poste d'examen optique muni de moyens d'examen optique simultané des n pastilles placées au poste de contrôle, et
- un ensemble de prise individuelle des pastilles à la position de sortie et de répartition de ces pastilles en lots suivant l'affectation donnée par les moyens d'examen optique.

3. Dispositif selon la revendication 2, caractérisé en ce que l'ensemble de prise individuelle et de répartition comprend un barillet de sortie (28) rotatif et portant un jeu de n pinces (98) à commande individuelle et des moyens (122) pour ouvrir sélectivement, à un poste de réception (30), les pinces portant des pastilles indiquées comme correctes par les moyens d'examen optique et des moyens pour ouvrir les pinces restantes à un emplacement (34) de réception de pastilles défectueuses.

4. Dispositif selon la revendication 3, caractérisé en ce que le barillet de sortie (28) comporte également des moyens pour ouvrir les pinces portant des pastilles acceptables à un second poste de réception (32).

5. Dispositif selon la revendication 2, 3 ou 4, caractérisé en ce que le poste (20) de déchargement et de présentation des pastilles comporte un tapis roulant (40) permettant d'amener les n pastilles terminales de n files de pastilles auxdits emplacements de prise répartis suivant un segment dont la médiatrice passe par l'axe (52) de rotation du barillet d'entrée et d'orientation (22).

6. Dispositif selon l'une quelconque des revendications 2 à 5, caractérisé en ce que le dit barillet d'entrée et d'orientation (22) comprend plusieurs jeux de n pinces, régulièrement réparties angulairement sur un plateau tournant (85), toutes les pinces ayant un corps rotatif (100) dans le plateau (85) et tous les corps de pinces étant reliés entre eux de façon à tourner simultanément sous l'action d'une came fixe (114) lorsque le plateau tourne, par exemple lorsque le jeu de pinces arrive au poste de déchargement et de présentation (20).

7. Dispositif selon la revendication 6, caractérisé en ce que chacune des pinces (98) comporte un noyau (105) mobile entre une position d'ouverture forcée des pinces et une position de fermeture, et en ce que le barillet d'entrée et d'orientation (22) est associé à des vérins fixes (96a, 96b) de fermeture des pinces au poste de déchargement et de présentation et d'ouverture des pinces au poste de transfert (56).

8. Dispositif selon l'une quelconque des revendications précédentes, caractérisé en ce que le barillet de contrôle comporte un plateau rotatif portant au moins trois tables de contrôle (57) régulièrement réparties angulairement de façon à venir successivement au poste de contrôle (59), chaque table comprenant un plateau incliné (74) de réception de n pastilles muni de moyens (70) permettant de lui imposer un mouvement de va-et-vient, et une barrette fixe (76) de retenue des pastilles, permettant à ces pastilles de tourner autour de leur axe.

9. Dispositif selon la revendication 8, caractérisé en ce que le poste d'examen comprend un bloc de contrôle optique fixe (70) d'observation d'une génératrice des n pastilles alignées.

10. Dispositif selon l'une quelconque des revendications précédentes, comprenant une unité de traitement de signal, de calcul et d'automatisme, commandant l'ensemble des barillets, traitant les signaux fournis par le bloc d'examen optique et commandant l'ensemble de répartition des pastilles.
